# EUROPEAN PATENT SPECIFICATION

(11) **EP 2 252 790 B1**
(45) Date of publication and mention of the grant of the patent: **28.09.2011**
(21) Application number: 09702794.0
(22) Date of filing: 14.01.2009
(51) Int. Cl.: F03D 1/06, F03D 11/00

(54) **A MODULAR ROTOR BLADE FOR A POWER-GENERATING TURBINE AND A METHOD FOR ASSEMBLING A POWER-GENERATING TURBINE WITH MODULAR ROTOR BLADES**
MODULARES ROTORBLATT FÜR EINE STROMERZEUGUNGSTURBINE UND VERFAHREN ZUR HERSTELLUNG EINER STROMERZEUGUNGSTURBINE MIT MODULAREN ROTORBLÄTTERN
PALE DE ROTOR MODULAIRE DESTINÉE À UNE TURBINE GÉNÉRATRICE DE COURANT ET PROCÉDÉ D'ASSEMBLAGE D'UNE TELLE TURBINE AU MOYEN DE PALES DE ROTOR MODULAIRES

(30) Priority: 14.01.2008 US 11189 P
(43) Date of publication of application: 24.11.2010
(73) Proprietor: Clipper Windpower, Inc., Carpinteria CA 93013 (US)
(72) Inventor: GLENN, Brian, Plymouth CA 95669 (US); DEHLSEN, James, G., P., Montecito, CA 93013 (US); KELLER, Walter, 66994 Dahn (DE); ROHM, Andreas, 73240 Wendungen (DE); MEHRLE, Wolfgang, 76831 Billigheim-Ingenheim (DE); STUCKERT, Martin, 76855 Annweiler (DE)
(74) Representative: Zenz
(86) International application number: PCT/IB2009/000052
(87) International publication number: WO 2009/090537

(56) References cited:
- EP-A- 1 318 300
- EP-A- 1 584 817
- US-A1- 2007 253 824

## Description

### BACKGROUND OF THE INVENTION

### Field of the Invention

This invention relates to electric power-generating devices, such as wind turbines and ocean current turbines, and more particularly to a modular rotor blade for a power generating turbine, which has one or more detachable blade sections, which can be detached for shipment and assembled onsite. The invention relates further to a method for assembling a power generating turbine with modular rotor blades.

### Description of the Prior Art

Conventional wind turbine rotors utilize blades manufactured as one piece-fixed length blades, joined at a rotating hub. These blades may be of variable pitch (selectively rotatable about their longitudinal axes) in order to alter the angle of attack relative to the incoming fluid flow, principally for power shedding in high-flow velocities.

Alternatively, these blades may be fixed pitch or stall-regulated, wherein blade lift and therefore power capture falls off dramatically as wind speeds exceed some nominal value. Both variable pitch and stall regulated rotor blades with fixed diameters are well known in the art. US Patent 6,726,439 B2, describes a wind or water flow energy converter comprising a wind or water flow actuated rotor assembly. The rotor of US Patent 6,726,439 B2 comprises a plurality of blades, wherein the blades are variable in length to provide a variable diameter rotor. The rotor diameter is controlled to fully extend the rotor at low flow velocity and to retract the rotor, as flow velocities increases such that the loads delivered by or exerted upon the rotor do not exceed set limits.

A wind power-generating device includes an electric generator housed in a turbine nacelle, which is mounted atop a tall tower structure anchored to the ground. The turbine is free to rotate in the horizontal plane such that it tends to remain in the path of prevailing wind current. The turbine has a rotor with variable pitch blades, which rotate in response to wind current. Each of the blades has a blade base section referred to as a root blade attached to a rotor hub and a blade extension referred to as an extender blade that is variable in length to provide a variable diameter rotor. The rotor diameter is controlled to fully extend the rotor at low flow velocity and to retract the rotor as flow velocity increases such that the loads delivered by or exerted upon the rotor do not exceed set limits. The power-generating device is held by the tower structure in the path of the wind current such that the power-generating device is held in place horizontally in alignment with the wind current. An electric generator is driven by the turbine to produce electricity and is connected to power carrying cables inter-connecting the generator to other units and/or to a power grid.

Wind turbine blades greater than 50m in length cannot be transported over land using conventional equipment and technology. US Patent Application US 2007/0253824 A1 discloses a modular rotor blade for a wind turbine, wherein the rotor blade comprises at least a first rotor blade section and a second rotor blade section. The first and second rotor blade sections are rigidly fixed together to provide the complete rotor blade after the sections have been transported to the site for the wind turbine. The rotor blade sections of this prior art modular rotor blade are fixed together rigidly, i.e. once connected the rotor blade sections cannot be detached again. In case of a malfunction of or damage to, for example, the outer rotor blade section of one rotor blade, the complete rotor blade must be replaced.

EP 1 584 817 A1 also discloses a modular wind turbine blade. The blade is transversely subdivided into two or more independent modules constituted of external aerodynamic cases or walls and an internal longitudinal reinforcement structure. The modules are provided with connecting means located in coincidence with the end sections of the longitudinal reinforcement structure and are constituted of lugs, projecting in coinciding portions provided with faceable holes for receiving jointing elements. Once connected, the demounting of the separate modules is very time-consuming and therefore quite expensive.

Therefore, it is an object of the present invention to provide a modular rotor blade for a power generating turbine that allows simple replacement of individual rotor blade sections in case of damage to or malfunction of a section. It is a further object of the present invention to provide a method for assembling a power generating turbine with such modular rotor blades.

### SUMMARY OF THE INVENTION

The first object of the invention is solved by a modular rotor blade for a power generating turbine, comprising at least two rotor blade sections, wherein each rotor blade section comprises at least one connecting part having at least one conical opening, the connecting parts of adjacent rotor blade sections rest against each other such that the conical openings of the connecting parts are aligned with each other and form a continuous conical connecting opening.

It should be noted that the expression "opening" is a generic term for the expression of a through hole referring to a hole that is reamed, drilled, milled etc., completely through the substrate, and a recess referring to hole which does not go all the way through the substrate (which is reamed, drilled, or milled to a specified depth).

One of the connecting parts can be formed, for example, as a beam or box beam protruding from the end face of one of the adjacent rotor blade sections, and the connecting part of the other rotor blade section can be formed as a receptacle, wherein the (box) beam is adapted to fit into the receptacle according to the type of a fork-tongue-joint. Alternatively, each connecting part of two adjacent rotor blade sections can also be provided as a simple connecting rod, wherein one connecting rod protrudes from the end face of a first rotor blade section and the other connecting rod of a second rotor blade section adjacent to the first rotor blade section is arranged within the other rotor blade section. Typically, the form of the connecting parts can be adjusted to the application area of the rotor blade and no specific form is predetermined. However, it is essential that the connecting parts comprise at least one conical opening and that the connecting parts of adjacent rotor blade sections rest against each other such that the conical openings of the connecting parts are aligned with each other and form a continuous conical connecting opening.

The modular rotor blade according to the present invention further comprises receiving means for receiving tensioning means, wherein the receiving means are arranged at the smaller diameter end of the continuous conical connecting opening, wherein the continuous conical connecting opening is provided by the aligned conical openings of the connecting parts. A conical bolt corresponding to the conical connecting opening is arranged within the continuous conical connecting opening, and at least one tensioning means passes through the conical bolt and tensions the conical bolt against the receiving means.

Since the bolt and the continuous conical connecting opening comprise a mating conical or tapered shape, tensioning of the conical bolt against the receiving means fastens the connecting parts of adjacent rotor blade sections to each other, and thereby adjacent rotor blade sections of the modular rotor blade are fastened to each other in a detachable manner. The length of the conical bolt must not match the depth of the conical connecting opening, but the bolt must abut against a sufficient part of the conical openings of each of the connecting parts of adjacent rotor blade sections. Further, the tensioning means can be provided, for example, as a screw, which is passed through the conical bolt. In order to tension the conical bolt against the receiving means the tensioning means must be attached to the receiving means. Such attachment can be achieved by providing at least one female threat within the receiving means and a male thread at the screw so that the male thread can engage the female thread thereby tensioning the bolt against the receiving means. Alternatively, such attachment can be achieved by passing a screw through the receiving means, wherein the screw comprises a male thread at the protruding part, wherein the male thread can be received by an appropiate nut. The number of tensioning means passed through the conical bolt depends on the dimensions of the conical bolt and therefore the dimensions of the modular rotor blade. For example, the number of tensioning means can be four or six.

In other words, the invention relates to a rotor blade with two or more sections, including a first rotor blade section and a second rotor blade section. The first and second rotor blade sections have provisions for attaching the second rotor blade section to the first rotor blade section in a detachable manner. The advantage of such a joint including a conical bolt received and tightened in a corresponding continuous conical connecting opening is that forces and moments are not borne by a commonly used threaded joint connection but substantially absorbed by the conical joint according to the present invention. Accordingly, the loads acting on the tensioning means are reduced and minimized thereby improving the fatigue durability of the connection between the adjacent rotor blade sections. Advantageously, the inclination of the continuous conical connecting opening as well as the inclination of the conical bolt is in the range of 1.5° to 3.5°, wherein an inclination angle for both the continuous conical connecting opening and the conical bolt of less than 3° is preferred.

During operation of the power generating turbine, the loads acting upon the conical bolts and the corresponding continuous conical connecting opening are enormous and cause play or looseness of the connection of adjacent rotor blade sections. For example, the continuous conical connecting opening is slightly widened and/or the conical bolt is deformed. Therefore, the connection between adjacent rotor blade sections must be serviced after a predetermined operation time. For that purpose a present conical bolt can be removed and replaced by a new one. However, since the level of widening of the continuous connecting opening is not known and the levels of widening are not identical if more than one continuous opening is provided, an adaption of a new conical bolt to a widened continuous opening is very difficult, time consuming and cost-intensive.

Accordingly, a preferred embodiment of the modular rotor blade of the present invention comprises a gap defined between the receiving means and the end face of the conical bolt having the smaller diameter. In this regard, the smallest outer diameter of the conical bolt is larger than the smallest inner diameter of the continuous conical connecting opening. In case of play or looseness of the connection between adjacent rotor blade sections, the tensioning means is simply retightened, whereby the conical bolt is moved further and "deeper" into the continuous conical connecting opening thereby eliminating the play and looseness of the connection between adjacent rotor blade sections. The retightening of the tensioning means can be carried out during maintenance of the power-generating turbine, so that, after maintenance, the connection between adjacent rotor blade sections equates to the initial connection with respect to fixedness, with the only difference being the penetration depth of the conical bolt into the continuous conical connecting openings. By providing the gap, maintenance regarding the above-mentioned tolerance can be facilitated and accelerated. Furthermore, the maintenance costs can be lowered since no new conical bolts have to be used.

According to another aspect of the present invention, the receiving means is integrally formed with the relevant connecting part. Such an integral design or formation of the receiving means reduces the number of parts to be lifted and assembled on site and, thus, reduces installation costs. Furthermore, the integral formation of the receiving means facilitates the usage of a (box) beam as a connecting part of one of the adjacent rotor blade sections. When using this kind of formation, an access to the interior of the (box) beam is needless and redundant.

The connecting parts have at least one conical opening. The conicity or tapering of the openings can be provided by the connecting parts itself. In this case the durability of the surface of the conical opening is determined by the material of the connecting parts, or at least determined by the material in the area of the opening. Therefore, it is preferred that each of the conical openings is provided with a (metallic) bushing arranged in a respective opening in a corresponding connecting part. By providing a conical bushing the durability of the surface of the conical openings is determined by the material of the bushings, and not by the material of the connecting part. It is therefore possible to choose a very hard and/or strong material for the bushings which is not suitable for the connecting parts itself.

In order to save material costs and to reduce the weight of the entire rotor blade, it is preferred that the conical bolt is hollow. However, to transmit loads from one end face of the bolt to the other end face of the bolt, which is required for tensioning the bolt against the receiving means, the bolt can comprise webs or partition walls, particularly around the tensioning means passing through the bolt.

To facilitate the maintenance and the assembly of the modular rotor blade, an access door is provided in at least one of adjacent rotor blade sections. The access door must be dimensioned to allow access to the continuous connecting opening and must allow the insertion of the conical bolt. Without such an access door, access to the above-mentioned parts of adjacent rotor blade sections must be carried out from within the rotor blade. This is time consuming and simply not possible for outer, and therefore thinner blade sections.

To facilitate the alignment of adjacent rotor blade sections when assembling the rotor blade, guiding means are arranged at the end faces of adjacent rotor blade sections. The guiding means can comprise at least one bolt at one end face of adjacent rotor blade sections and at least one corresponding recess in the end face of the other rotor blade section, wherein at least the tip of the bolt is tapered to facilitate alignment. The non-tapered portion of the bolt and a portion of the recess can comprise a female thread and a male thread, respectively. To support the connection of the adjacent rotor blade sections the threads can engage each other.

The first object of the present invention is alternatively solved by a modular rotor blade for a power generating turbine, comprising at least two rotor blade sections, wherein each rotor blade section comprises at least one connecting part, one connecting part enclosing the connecting part of an adjacent rotor blade section. The enclosing connecting part comprises at least two conical through holes and the enclosed connecting part comprises at least one through hole, wherein the through holes are arranged on the same longitudinal axis.

If the enclosed connecting part is formed without an inner space, i.e. the enclosed connecting part is not hollow, the at least one through hole is formed as a double conical through hole, wherein the openings with the greater diameter open up to the outer surfaces of the enclosed connecting part. In other words, the at least one through hole has a form comparable with an hourglass or is in the shape of a venturi nozzle.

Alternatively, the enclosed connecting part can also be formed with an inner space. In this case one of the connecting parts may be provided, for example, as a (box) beam which is enclosed by the other (enclosing) connecting part. Independent of the exact form or cross section of such an enclosed connecting part with inner space, it must comprise at least two through holes arranged on the same longitudinal axis.

As already mentioned above, the through hole(s) must be provided in such a manner that the opening with the greater diameter opens up towards the outer surfaces of the connecting parts. In this respect, the connecting parts of adjacent rotor blade sections rest against each other such that the conical through holes of the enclosing connecting part are aligned with the at least one through hole of the enclosed connecting part, thereby defining at least one conical connecting through hole. At least two conical bolts are arranged within the through holes of the enclosing part extending into the at least one through hole of the enclosed connecting part, and at least one tensioning means passes through the at least two conical bolts and tensions the conical bolts.

Since the through holes of the enclosed and the enclosing connecting parts are arranged on the same longitudinal axis and the through holes are formed as mentioned above, no receiving means for tensioning the bolts is necessary in order to connect the connecting parts of adjacent rotor blade sections in a detachable manner. Accordingly, such a design without the usage of receiving means reduces the number of parts to be lifted and assembled on site and, thus, reduces the installation costs.

One preferred embodiment of the modular rotor blade according to the second solution comprises a gap between opposing end faces of the conical bolts. Due to the gap, maintenance of the modular rotor blade is simplified as pointed out in detail above. In this respect, further embodiments of the modular rotor blade according to the second solution are set forth in the accompanying claims, wherein the advantages of these embodiments correspond to the relevant embodiments of the first solution.

With respect to a method for assembling a power generating turbine with modular rotor blades, the method comprises: the steps of manufacturing rotor blades in at least two rotor blade sections, wherein adjacent rotor blade sections have connecting parts for mounting said adjacent blade sections together; transporting said blade sections to a site; providing, at said site, a turbine on a structure that is held stationary with reference to said fluid flow, said turbine including a rotor hub and a rotor having provisions to mount first rotor blade sections to said rotor hub; connecting said first blade sections to said rotor hub; and attaching second rotor blade sections to first blade sections by mounting the connecting parts of adjacent rotor blade sections together by means of at least one conical bolt being tensioned by at least one tensioning means passing through the conical bolt. This method allows large wind turbine blades to be manufactured and transported in multiple pieces and, thus, has the advantage of reduced transportation costs for large wind turbine blades.

As a further aspect of the method according to the present invention, the second rotor blade sections are lifted by a hoist within a nacelle before attaching the second rotor blade sections to the first rotor blade sections. For example in the case of a wind turbine, this aspect has the advantage that no tower crane or helicopter is needed in order to assemble the modular rotor blades thereby reducing the costs for installation of the wind turbine.

According to a further step of the method of the present invention, the method comprises the step of attaching a blade tip to said second blade section. Due to this feature, large wind turbines can be manufactured and transported in multiple pieces thereby reducing the costs for transportation.

Accordingly, the present invention provides a design of an easily re- and post-tensioning joint of modular rotor blades. This design prevents all movements within the joint and prevents the structural fatigue that would be caused by such movements. The invention has the advantage that it lowers the transportation costs of current wind turbine blades exceeding 50 meters or more in length, and allows larger wind turbine blades to be transported on existing air, land and water travel routes. The invention has the further advantage that the joint of adjacent rotor blade sections allows large wind turbine blades to be manufactured and transported in multiple pieces without associated maintenance costs for re-tensioning of joints. Further, the invention has the advantage of reduced transportation costs for large wind turbine blades. Furthermore, the invention has the advantage of allowing outboard blades severely damaged due to a lightening strike to be replaced without replacing the whole blade. Finally, the invention has the advantage of not requiring annual maintenance.

### BRIEF DESCRIPTION OF THE DRAWINGS

The invention will be described in detail with reference to the drawings in which:
FIGURE 1 is a diagram of a wind turbine system in which the present invention is embodied illustrating how the second blade section is lifted by a hoist in the nacelle;
FIGURE 2 is a detailed view of FIGURE 1;
FIGURE 3 is a perspective view of a modular rotor blade comprising a first section and a second blade section that connects to the first section according to a first embodiment of the present invention;
FIGURE 4 is a top view of the modular rotor blade of FIGURE 3;
FIGURE 5 is a cross sectional view of the modular rotor blade taken along the line A-A of FIGURE 4;
FIGURE 6 is a is a detail "A" of FIGURE 5 illustrating how a conical bolt is arranged in a continuous conical connecting opening;
FIGURE 7 is a detailed cross-sectional view of a second embodiment of the present invention; and
FIGURE 8 is a detailed cross-sectional view of a third embodiment of the present invention.

In these figures, the same numerals refer to similar elements in the drawings. It should be understood that the sizes of the different components in the figures may not be to scale, or in exact proportion, and are shown for visual clarity and for the purpose of explanation.

### DESCRIPTION OF THE PREFERRED EMBODIMENTS

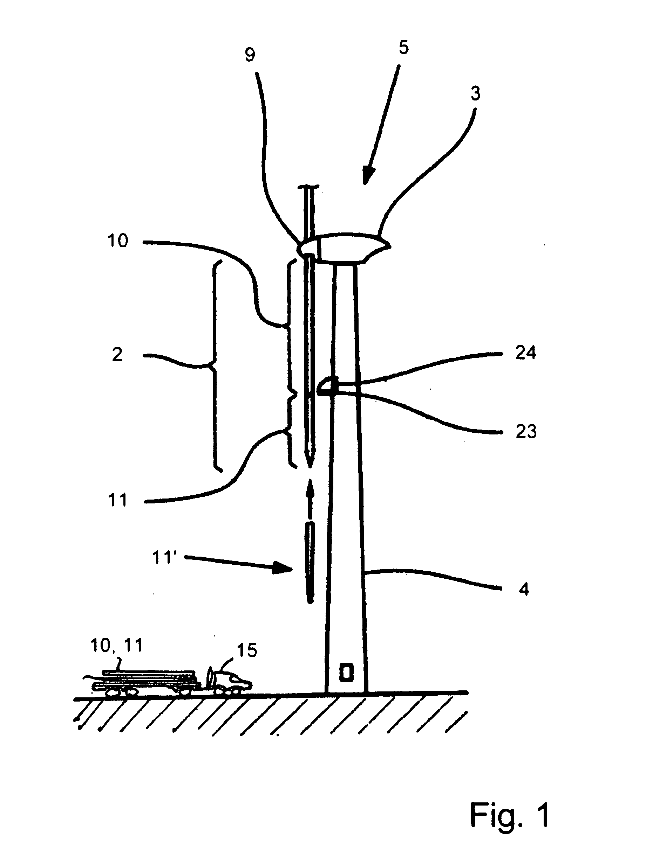

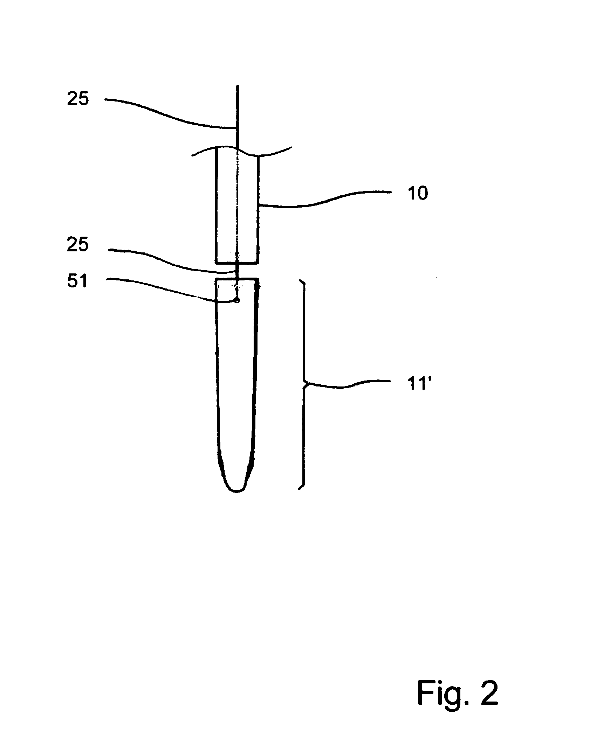

Referring to FIGURE 1, which is diagram of a wind turbine site in which the invention is exemplarily embodied. Each modular rotor blade 2 is manufactured in two or more sections, including a first rotor blade section 10 and a second rotor blade section 11, 11'. The first and second rotor blade sections have provisions for attaching the second rotor blade section 11, 11' to the first rotor blade section 10. The rotor blade sections are moved by transport 15 to the wind turbine site. At the site, a turbine within a nacelle 3 is provided on a structure 4 that is held stationary with reference to the fluid flow. The turbine includes a rotor hub 9 having provisions to mount the first rotor blade sections 10 to the rotor hub 9. The first rotor blade sections 10 are connected to the rotor hub 9 and the second rotor blade sections 11 are hoisted up by a cable 25 (FIGURE 2) to the first rotor blade sections 10 and are attached to the first rotor blade sections 10.

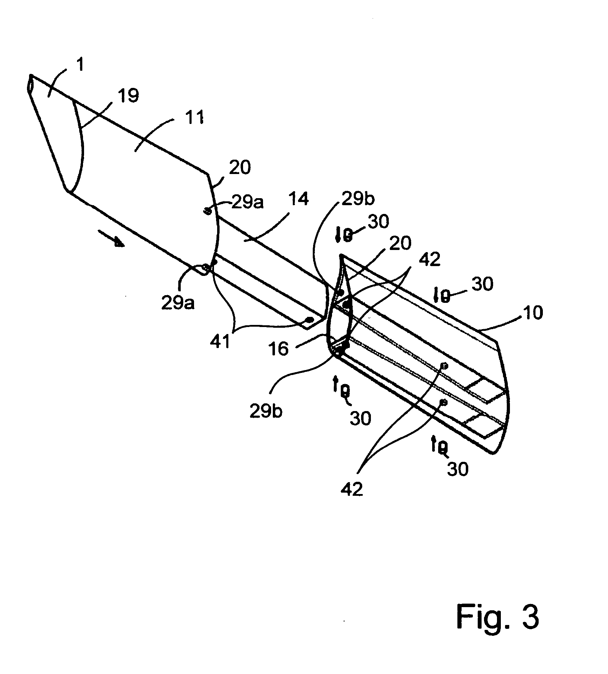

FIGURE 2 illustrates how a hoist in the nacelle 3 lifts the rotor blade section 11 into locking position with the first rotor blade section 10. The first rotor blade section 10 is connected to the rotor hub 9 and the second rotor blade section 11 hoisted up by a cable 25 to engage the first rotor blade section 10 is attached to the first rotor blade section 10 by means of a joint described in more detail with reference to FIGURES 3 to 8. More sections, such as a separate tip section 1 (FIGURE 3) may be provided and assembled in a similar manner.

With respect to FIGURE 3, which is a perspective view of the modular rotor blade of FIGURE 1 according to a first embodiment of the present invention, the modular rotor blade comprises the first rotor blade section 10, which connects to the (not shown) rotor hub 9, and the second rotor blade section 11 that connects to the first rotor blade section 10 by, inter alia, means of a connecting part 14 and a connecting part 16.

In this embodiment the connecting part 14 of the second rotor blade section 11, the second connecting part 14, is formed as a beam with two side walls, and upper and lower sides (connecting part 14 can also be referred to as a "tongue"), and the connecting part 16 of the first rotor blade section 10, the first connecting part 16, is formed as a receptacle (and can also be referred to as a "fork"). The first connecting part 16 is adapted to receive the second connecting part 14, and the cross section of the second connecting part 14 is adjusted to the cross section of the first connecting part 16 so that the upper and lower surfaces of the second connecting part 14 support overlapping portions of the first rotor blade section 10.

In alternative embodiments, the cross section of the second connecting part can comprise a rectangular cross section (including a square cross section) or an elliptical cross section (including a circular cross section).

The modular rotor blade shown in FIGURE 3 also comprises a blade tip 1 that connects to the second blade section 11. The blade sections 10, 11 and the blade tip 1 are assembled into a contiguous aerodynamic surface at a blade-tip-joint seam 19 and a blade-sections-joint seam 20 by means of the above-mentioned connecting parts, which are wholly contained within the blade structure.

At the end faces of each rotor blade section 10, 11 guiding means 29a, 29b are provided, wherein the second section guiding means 29a are formed as at least partially conical bolts and the first section guiding means are provided as corresponding openings in the end face. During the assembly of the modular rotor blade the guiding means support the alignment of the relevant rotor blade section. Furthermore, in case the bolts and the openings are provided with male and female threads, the guiding means can be used to support the connection between adjacent sections.

Each connecting part 14, 16 comprises four conical openings 41, 42, wherein at the shown embodiment the conical openings extend through the overall depth of the side walls, i.e. the openings define through holes. FIGURE 3 further shows four conical bolts 30 to be inserted in (not shown) continuous conical connecting openings formed by one conical opening 41 and one conical opening 42 at each time when adjacent rotor blade sections rest against each other and when corresponding conical openings 41, 42 are aligned.

The conical or tapered bolts 30, according to the type of shear bolts can be tensioned by means of tensioning 28 means in the shape of four or six smaller sized bolts. This design allows the bolts 28 to be easily re-tensioned in the field via a small removable access door 32 in the first rotor blade section 10 and/or the second rotor blade section 11. This design of the joint also prevents all movement within the joint and prevents structural fatigue, which would be caused by this movement. A similar access door and fork-and-tongue joint elements wholly contained within the blade structure are provided for the blade tip 1, but are not shown in FIGURE 3.

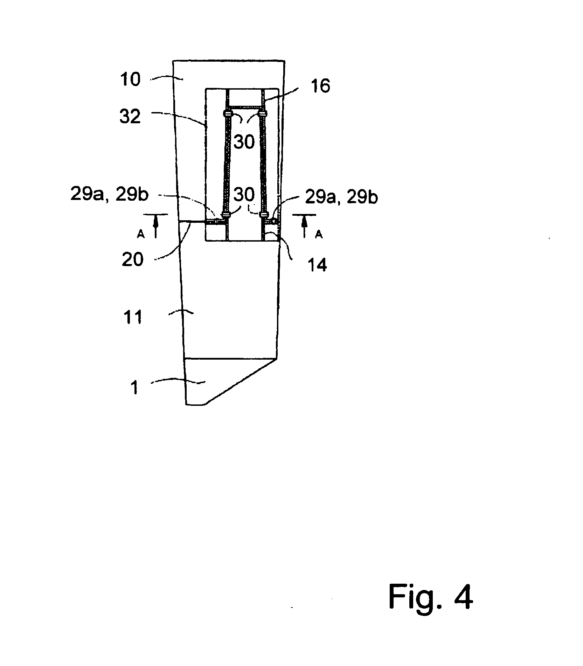

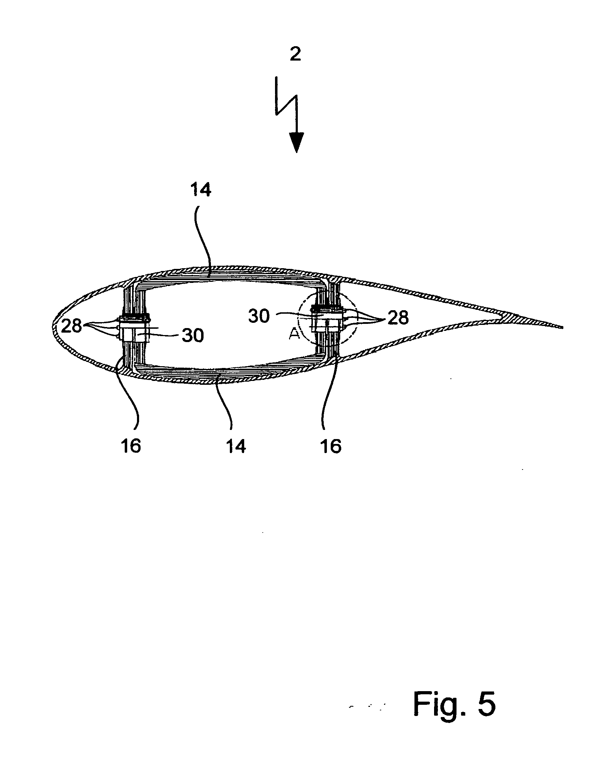

With respect to FIGURES 4 and 5, details of the first embodiment of the present invention are shown. The access door 32 provides access to the main joint elements, namely connecting parts 14, 16, and to the tapered or conical shear bolts 30. For example, the access door 32 can be reached via a port 23 and a fold-down hatch 24 (see FIGURE 1), which, when opened, extends a ramp for servicing and module replacement. The second blade section guiding means 29a, 29b, shown in FIGURE 3, are also accessible via the access door 32. This design prevents all movement within the joint or connection, and prevents structural fatigue, which would be caused by these movements. A similar access door and connecting parts with all further parts necessary for attachment, wholly contained within the blade structure, are provided for the blade tip 1, but are not shown in FIGURE 4. This design allows the conical shear bolts 30 to be easily mounted in the field via the removable access door 32 in the blade sections.

FIGURE 5 shows a sectional view along the line A-A of FIGURE 4 of the conical or tapered shear bolts 30 and the connecting parts 14, 16. As can be seen from FIGURE 5, the connecting parts 14, 16 of the first embodiment are adapted to fit into each other, wherein the connecting part 14 of the second rotor blade section 11 is enclosed by the connecting part 16 of the first rotor blade section 10.

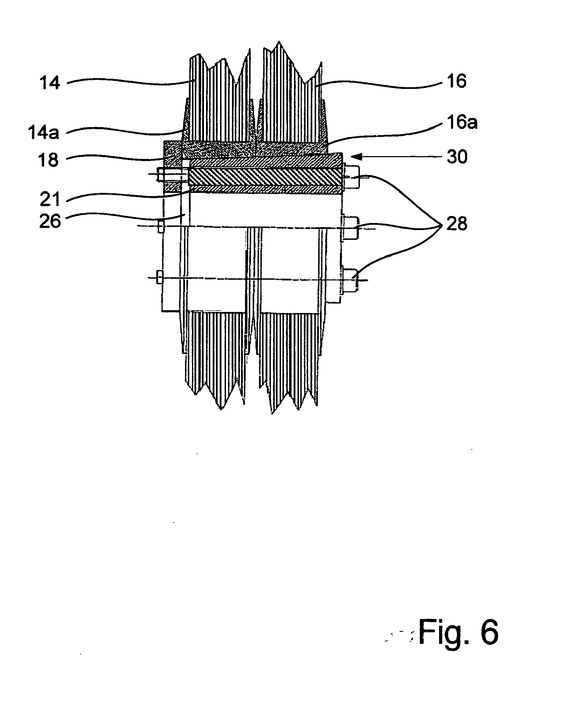

FIGURE 6 shows a detailed view of a conical or tapered bolt 30 in accordance with the first embodiment of the present invention shown in FIGURES 4 or 5, wherein the upper half of FIGURE 6 is a sectional view through one tensioning means 28, whereas the lower half of FIGURE 6 is a top view. The connecting parts 14, 16 comprise cylindrical through holes which, in combination with bushings 14a, 16a, define the conical openings 41, 42. In order to improve the durability of the bushings, metallic bushings are preferred. The conical bolt 30 within the conical opening connects the connecting parts 14, 16 of the first and second rotor blade sections 10, 11. A number of tensioning means 28 is passed through the substantially hollow conical bolt 30 and mounted in a receiving means 18, arranged at bushing 14a which may close the left end (in FIGURE 6) of the conical opening. The receiving means 18 forms a counter bearing for the bolt 30 and comprises a number of female threads engaging with relevant male threads of the tensioning means 28. By providing a conical opening, the conical bolt 30 can be tensioned against the receiving means 18 by means of the tensioning means 28, thereby fastening the connecting parts 14, 16 to each other.

Between the receiving means 18 and the smaller diameter end face of the conical bolt 30 (the left end face in FIGURE 6) a gap 26 is formed which allows an easy and simple retightening/re-tensioning of the conical bolt 30 in case of a tolerance within the overall connection. The size of the gap towards the longitudinal axis of the tensioning means amounts to 5 to 10% of the length of the continuous conical connecting opening.

As mentioned above, the conical bolt 30 is substantially hollow. However, to bear forces acting on the bolt 30, webs 21 are formed within the conical bolt 30, which encloses the tensioning means 28.

According to the shown embodiment the tensioning means 28 are provided as screws with a male thread at one end, wherein the male head engages with the female thread of the receiving means 18 for tensioning the conical bolt 30. In an alternative embodiment, the receiving means 18 may comprise through holes passed by the tensioning means 28 which are clamped against the receiving means 18 by counter nuts.

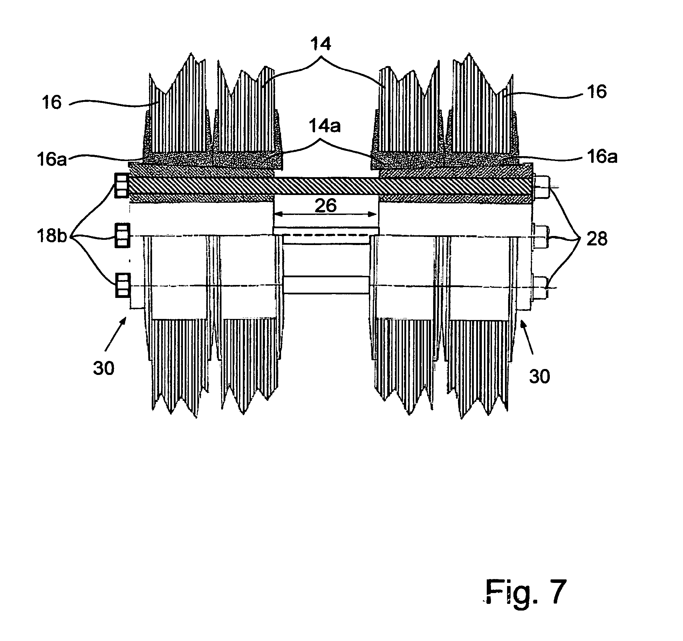

With respect to FIGURE 7, there is shown a detailed view of a second embodiment of the present invention. The connecting part 16 of the first rotor blade section 10 encloses the connecting part 14 of the second rotor blade section 11. Both connecting parts 14, 16 comprise two conical through holes. In the connected state of the rotor blade sections 10, 11 the connecting parts 14, 16 rest against each other such that the conical through holes of the enclosing connecting part 16 are aligned with the two through holes of the enclosed connecting part 14, thereby defining two continuous conical connecting through holes, i.e. the through holes of the connecting parts, and therefore the continuous conical connecting through holes are arranged on the same longitudinal axis in the connected state of the rotor blade sections 10, 11. The through holes of the connecting parts 14, 16 are provided in such a manner that the openings with the greater diameter widens towards the outer surfaces of the connecting parts 14, 16. This arrangement of the through holes of the connecting parts 14, 16 determines that the continuous connecting through holes extend towards the outer surface of the enclosing connecting part 16.

The embodiment shown in FIGURE 7 utilizes two conical bolts 30 which are arranged in two conical connecting through holes. The conical bolts 30 are passed by a plurality of tensioning means 28 (screws), wherein each screw 28 is passed through both bolts 30. Due to the formation of the continuous connecting through holes no special receiving means are necessary. The conical bolts 30 are tensioned against each other by the screws 28, wherein the screws 28 comprise a screw head 28a adjacent to one bolt and a counter nut 18b adjacent to the other bolt. In case play or looseness appears in the connection, the bolts may be retightened or re-tensioned by tightening the counter nuts 18b and the screws 28. The gap 26 between the two conical bolts 30 allows that the bolts 30 are pulled further or "deeper" into the continuous connecting through holes, thereby eliminating play or looseness of the connection.

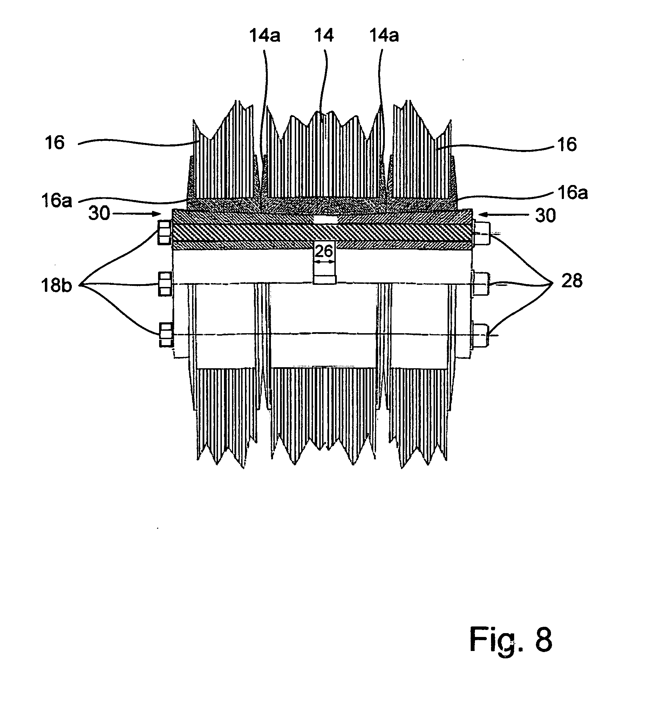

FIGURE 8 shows a detailed view of a third embodiment of the present invention, wherein the upper half of FIGURE 8 is a sectional view through two conical bolts 30, whereas the lower half of FIGURE 8 is a top view.

The third embodiment utilizes an enclosing connecting part 16 and an enclosed connecting part 14. In contrast to the second embodiment the enclosed connecting part 14 is solid, i.e. no separate side walls and therefore no space within the connecting part is provided. Accordingly, the enclosed connecting part 14 is not hollow. The enclosing connecting part 16 comprises two conical through holes and the enclosed connecting part 14 comprises one through hole, wherein the through holes are, in the assembled state of the modular rotor blade, arranged on the same longitudinal axis. The through hole of the enclosed connecting part 14 is formed as a double conical through hole, wherein the openings with the greater diameter open up to the outer surfaces of the enclosed connecting part. The conical through holes of the enclosing connecting part are aligned with the at least one through hole of the enclosed connecting part, thereby defining one double conical through hole. Within these conical connecting recesses two bolts 30 are arranged enclosing a gap 26 between their opposing end faces. A number of tensioning means 28 in the shape of screws are passed through the bolts 30 and tensions the bolts 30 against each other. The tensioning mechanism is the same as that shown in FIGURE 7. Thus, for further details refer to FIGURE 7.

While the invention has been particularly shown and described with reference to preferred embodiments thereof, it will be understood by those skilled in the art that the foregoing and other changes in form and detail may be made therein without departing from the scope of the invention, as defined in the appended claims.

## Claims

1. A modular rotor blade for a power generating turbine, comprising at least two rotor blade sections (10, 11),
wherein each rotor blade section (10, 11) comprises at least one connecting part (14, 16) having at least one conical opening (41, 42), the connecting parts (14, 16) of adjacent rotor blade sections (10, 11) rest against each other such that the conical openings (41, 42) of the connecting parts (14, 16) are aligned with each other and form a continuous conical connecting opening,
receiving means (18) for receiving tensioning means (28) are arranged at the smaller diameter end of the conical connecting opening,
a conical bolt (30) corresponding to the continuous conical connecting opening is arranged therein, and
at least one tensioning means (28) passing through the conical bolt (30) and tensioning the conical bolt (30) against the receiving means (18).

2. The modular rotor blade according to claim 1, wherein a gap (26) is defined between the receiving means (18) and the end face of the conical bolt (30) having the smaller diameter.

3. The modular rotor blade according to claim 1, wherein the smallest outer diameter of the conical bolt (30) is larger than the smallest inner diameter of the continuous conical connecting opening.

4. The modular rotor blade according one of the claims 1 - 3, wherein the receiving means (18) is integrally formed with the relevant connecting part (14).

5. The modular rotor blade according to one of the claims 1 - 4, wherein each of the conical openings (41, 42) is provided with a bushing (14a, 16a) arranged in a respective opening in a corresponding connecting part (14, 16).

6. The modular rotor blade according to one of the claims 1 - 5, wherein the conical bolt (30) is hollow.

7. The modular rotor blade according to one of the claims 1 - 6, wherein an access door (32) is provided in at least one of adjacent rotor blade sections (10, 11).

8. A modular rotor blade for a power generating turbine, comprising at least two rotor blade sections (10, 11),
wherein each rotor blade section (10, 11) comprises at least one connecting part (14, 16), one connecting part (16) enclosing the connecting part (14) of an adjacent rotor blade section (11), the enclosing connecting part (16) comprises at least two conical through holes and the enclosed connecting part (14) comprises at least one through hole, the through holes are arranged on the same longitudinal axis,
wherein the connecting parts (14, 16) of adjacent rotor blade sections (10, 11) rest against each other such that the conical through holes of the enclosing connecting part (16) are aligned with the at least one through hole of the enclosed connecting part (14), thereby defining at least one conical connecting through hole,
at least two conical bolts (30) are arranged within the through holes of the enclosing part (16) extending into the at least one through hole of the enclosed connecting part (14),
at least one tensioning means (28) passes through the at least two conical bolts (30) and tensions the conical bolts (30).

9. The modular rotor blade according to claim 8, wherein a gap (26) is provided between opposing end faces of the conical bolts (30).

10. The modular rotor blade according to claim 8 or 9, wherein each of the conical through holes is provided by a bushing (14a, 16a) arranged in a respective opening in the connecting parts (14, 16).

11. The modular rotor blade according to one of the claims 8 - 10, wherein the conical bolts (30) are hollow.

12. The modular rotor blade according to one of the claims 8 - 11, wherein an access door (32) is provided in at least one of adjacent blade sections (10, 11).

13. A method for assembling a power generating turbine with modular rotor blades (10, 11), comprising steps of:
A. manufacturing rotor blades in at least two rotor blade sections (10, 11), wherein adjacent rotor blade sections (10, 11) having connecting parts (14, 16) for mounting said adjacent rotor blade sections (10, 11) together;
B. transporting said rotor blade sections (10, 11) to a site;
C. providing, at said site, a turbine (3) on a structure (4) that is held stationary with reference to said fluid flow, said turbine (3) including a rotor hub (9) and a rotor (2) having provisions to mount first rotor blade sections (10) to said rotor hub (9);
D. connecting said first rotor blade sections (10) to said rotor hub (9); and
E. attaching second rotor blade sections (11) to first blade sections by mounting the connecting parts (14, 16) of adjacent rotor blade sections (10, 11) together by means of at least one conical bolt (30) being tensioned by at least one tensioning means (28) passing through the conical bolt (30).

14. The method according to claim 13, wherein the second rotor blade sections (11) are lifted by a hoist within a nacelle before attaching the second rotor blade sections (11) to the first rotor blade sections (10).

15. The method of claim 13 or 14, further comprising the step of:
F. attaching a rotor blade tip (1) to said second rotor blade section (11).

## Patentansprüche

1. Ein modulares Rotorblatt für eine energieerzeugende Turbine, aufweisend zumindest zwei Rotorblattabschnitte (10, 11),
wobei jeder Rotorblattabschnitt (10, 11) zumindest ein Anschlussteil (14, 16) mit zumindest einer konischen Öffnung (41, 42) aufweist, wobei die Anschlussteile (14, 16) benachbarter Rotorblattabschnitte aneinander anliegen, so dass die konischen Öffnungen (41, 42) der Anschlussteile (14, 16) aneinander ausgerichtet sind und eine durchgängige konische Verbindungsöffnung bilden,
wobei Aufnahmemittel (18) zum Aufnehmen von Spannmitteln (28) bei dem Ende der konischen Verbindungsöffnung mit kleinerem Durchmesser angeordnet sind,
wobei ein konischer Bolzen (30), der der durchgängigen konischen Verbindungsöffnung entspricht, in dieser angeordnet ist, und
wobei sich zumindest ein Spannmittel (28) durch den konischen Bolzen (30) erstreckt und den konischen Bolzen (30) gegen das Aufnahmemittel (18) verspannt.

2. Das modulare Rotorblatt nach Anspruch 1, wobei ein Spalt (26) zwischen dem Aufnahmemittel (18) und der Stirnfläche des konischen Bolzens (30) mit geringerem Durchmesser definiert ist.

3. Das modulare Rotorblatt nach Anspruch 1, wobei der kleinste Außendurchmesser des konischen Bolzens (30) größer ist als der kleinste Innendurchmesser der durchgängigen konischen Verbindungsöffnung ist.

4. Das modulare Rotorblatt nach einem der Ansprüche 1 bis 3, wobei das Aufnahmemittel (18) einstückig mit dem entsprechenden Anschlussteil (14) ausgebildet ist.

5. Das modulare Rotorblatt nach einem der Ansprüche 1 bis 4, wobei jede konische Öffnung (41, 42) mit einer Hülse (14a, 16a) bereitgestellt ist, die in einer entsprechenden Öffnung eines entsprechenden Anschlussteils (14, 16) angeordnet ist.

6. Das modulare Rotorblatt nach einem der Ansprüche 1 bis 5, wobei der konische Bolzen (30) hohl ist.

7. Das modulare Rotorblatt nach einem der Ansprüche 1 bis 6, wobei in zumindest einem der benachbarten Rotorblattabschnitte (10, 11) eine Zugangstür (32) angeordnet ist.

8. Ein modulares Rotorblatt für eine energieerzeugende Turbine, aufweisend zumindest zwei Rotorblattabschnitte (10, 11),
wobei jeder Rotorblattabschnitt (10, 11) zumindest ein Anschlussteil (14, 16) aufweist, wobei ein Anschlussteil (16) das Anschlussteil (14) eines benachbarten Rotorblattabschnittes (11) umgibt, wobei das umgebende Anschlussteil (16) zumindest zwei konische Durchgangsöffnungen und das umgebene Anschlussteil (14) zumindest eine Durchgangsöffnung aufweist, wobei die Durchgangsöffnungen auf der gleichen Längsachse angeordnet sind,
wobei die Anschlussteile (14, 16) benachbarter Rotorblattabschnitte (10, 11) derart aneinander anliegen, dass die konischen Durchgangsöffnungen des umgebenden Anschlussteils (16) an der zumindest einen Durchgangsöffnung des umgebenen Anschlussteils (14) ausgerichtet sind, wodurch zumindest eine konische Verbindungsdurchgangsöffnung definiert ist,
wobei zumindest zwei konische Bolzen (30) in den Durchgangsöffnungen des umgebenden Anschlussteils (16) angeordnet sind und sich in die zumindest eine Durchgangsöffnung des umgebenen Anschlussteils (14) erstrecken,
wobei zumindest ein Spannmittel (28) sich durch die zumindest zwei konischen Bolzen erstreckt und die konischen Bolzen (30) verspannt.

9. Das modulare Rotorblatt nach Anspruch 8, wobei eine Lücke (26) zwischen gegenüberliegenden Stirnflächen der konischen Bolzen (30) bereitgestellt ist.

10. Das modulare Rotorblatt nach Anspruch 8 oder 9, wobei jede der konischen Durchgangsöffnungen durch eine Hülse (14a, 16a) bereitgestellt ist, die in einer entsprechenden Öffnung in den Anschlussteilen (14, 16) angeordnet ist.

11. Das modulare Rotorblatt nach einem der Ansprüche 8 bis 10, wobei die konischen Bolzen (30) hohl sind.

12. Das modulare Rotorblatt nach einem der Ansprüche 8 bis 11, wobei in zumindest einem der benachbarten Rotorblattabschnitte (10, 11) eine Zugangstür (32) angeordnet ist.

13. Ein Verfahren zum Montieren einer energieerzeugenden Turbine mit modularen Rotorblättern (10, 11), aufweisend die Schritte:
A. Herstellen von Rotorblättern mit zumindest zwei Rotorblattabschnitten (10, 11), wobei benachbarte Rotorblattabschnitte (10, 11) Anschlussteile zum Zusammenmontieren der benachbarten Rotorblattabschnitte (10, 11) aufweisen,
B. Transportieren der Rotorblattabschnitte (10, 11) zu einem Standort,
C. Bereitstellen, bei dem Standort, einer Turbine (3) auf einer Struktur (4), die in Bezug auf einen Fluidstrom stationär gehalten ist, wobei die Turbine eine Rotornabe (9) und einen Rotor (2) mit Einrichtungen zum Anbringen der ersten Rotorblattabschnitte (10) an der Rotornabe (9) umfasst,
D. Befestigen der ersten Rotorblattabschnitte (10) an der Rotornabe (9), und
E. Anbringen der zweiten Rotorblattabschnitte (11) durch Zusammenmontieren der Anschlussteile (14, 16) benachbarter Rotorblattabschnitte (10, 11), und zwar mit zumindest einem konischen Bolzen (30), der mit zumindest einem Spannmittel (28), das sich durch den konischen Bolzen (30) erstreckt, gespannt ist.

14. Das Verfahren nach Anspruch 13, wobei die zweiten Rotorblattabschnitte (11) mit einer Winde innerhalb einer Gondel vor dem Anbringen der zweiten Rotorblattabschnitte (11) an den ersten Rotorblattabschnitt (10) angehoben werden.

15. Das Verfahren nach Anspruch 13 oder 14, ferner aufweisend den Schritt:
F. Anbringen einer Rotorblattspitze (1) an dem zweiten Rotorblattabschnitt (11).

## Revendications

1. Pale de rotor modulaire pour une turbine de production d'énergie, comprenant au moins deux sections de pale de rotor (10, 11),
dans laquelle chaque section de pale de rotor (10, 11) comprend au moins une partie de liaison (14, 16) ayant au moins une ouverture conique (41, 42), les parties de liaison (14, 16) des sections de pale de rotor (10, 11) adjacentes étant en appui l'une contre l'autre de façon telle que les ouvertures coniques (41, 42) des parties de liaison (14, 16) sont alignées l'une avec l'autre et forment une ouverture conique continue de liaison,
des moyens de réception (18) pour recevoir des moyens de mise sous tension (28) sont disposés à l'extrémité de l'ouverture conique de liaison qui a le plus petit diamètre,
une cheville conique (30) correspondant à l'ouverture conique continue de liaison est disposée dans celle-ci, et
au moins un moyen de mise sous tension (28) traversant la cheville conique (30) et mettant sous tension la cheville conique (30) contre les moyens de réception (18).

2. Pale de rotor modulaire suivant la revendication 1, dans laquelle un intervalle (26) est défini entre les moyens de réception (18) et la face d'extrémité de la cheville conique (30) ayant le plus petit diamètre.

3. Pale de rotor modulaire suivant la revendication 1, dans laquelle le diamètre extérieur le plus petit de la cheville conique (30) est plus grand que le diamètre intérieur le plus petit de l'ouverture conique continue de liaison.

4. Pale de rotor modulaire suivant l'une des revendications 1-3, dans laquelle les moyens de réception (18) sont formés d'un seul tenant avec la partie de liaison (14) correspondante.

5. Pale de rotor modulaire suivant l'une des revendications 1-4, dans laquelle chacune des ouvertures coniques (41, 42) est pourvue d'une douille (14a, 16a) disposée dans une ouverture respective située dans une partie de liaison (14, 16) correspondante.

6. Pale de rotor modulaire suivant l'une des revendications 1-5, dans laquelle la cheville conique (30) est creuse.

7. Pale de rotor modulaire suivant l'une des revendications 1-6, dans laquelle une porte d'accès (32) est prévue dans au moins l'une des sections de pale de rotor (10, 11) adjacentes.

8. Pale de rotor modulaire pour une turbine de production d'énergie, comprenant au moins deux sections de pale de rotor (10, 11),
dans laquelle chaque section de pale de rotor (10, 11) comprend au moins une partie de liaison (14, 16), une partie de liaison (16) entourant la partie de liaison (14) d'une section de pale de rotor (11) adjacente, la partie de liaison (16) qui entoure comprend au moins deux trous traversants coniques et la partie de liaison (14) qui est entourée comprend au moins un trou traversant, les trous traversants sont situés sur le même axe longitudinal,
dans laquelle les parties de liaison (14, 16) des sections de pale de rotor (10, 11) adjacentes sont en appui l'une contre l'autre de façon telle que les trous traversants coniques de la partie de liaison (16) qui entoure sont alignés avec le trou traversant, au nombre d'au moins un, de la partie de liaison (14) qui est entourée, définissant ainsi au moins un trou traversant conique de liaison,
au moins deux chevilles coniques (30) sont disposées dans les trous traversants de la partie (16) qui entoure, en s'étendant dans le trou traversant, au nombre d'au moins un, de la partie de liaison (14) qui est entourée,
au moins un moyen de mise sous tension (28) traverse les chevilles coniques (30), au nombre d'au moins deux, et met sous tension les chevilles coniques (30).

9. Pale de rotor modulaire suivant la revendication 8, dans laquelle un intervalle (26) est prévu entre des faces d'extrémité, en regard, des chevilles coniques (30).

10. Pale de rotor de type modulaire suivant la revendication 8 ou 9, dans laquelle chacun des trous traversants coniques est pourvu d'une douille (14a, 16a) disposée dans une ouverture respective située dans les parties de liaison (14, 16)

11. Pale de rotor modulaire suivant l'une des revendications 8-10, dans laquelle les chevilles coniques (30) sont creuses.

12. Pale de rotor modulaire suivant l'une des revendications 8-11, dans laquelle une porte d'accès (32) est prévue dans au moins l'une des sections de pale (10, 11) adjacentes.

13. Procédé d'assemblage d'une turbine de production d'énergie comportant des pales de rotor modulaires (10, 11), comprenant des opérations consistant :
A. à fabriquer des pales de rotor en au moins deux sections de pale de rotor (10, 11), des sections de pale de rotor (10, 11) adjacentes comportant des parties de liaison (14, 16) pour monter ensemble lesdites sections de pale de rotor (10, 11) adjacentes ;
B. à transporter lesdites sections de pale de rotor (10, 11) sur un site ;
C. à réaliser, sur ledit site, une turbine (3) sur une structure (4) qui est maintenue fixe vis-à-vis dudit écoulement de fluide, ladite turbine (3) comprenant un moyeu (9) de rotor et un rotor (2) comportant des éléments prévus pour monter des premières sections de pale de rotor (10) sur ledit moyeu (9) de rotor ;
D. à fixer lesdites premières sections de pale de rotor (10) audit moyeu (9) de rotor ; et
E. à relier des secondes sections de pale de rotor (11) aux premières sections de pale en montant ensemble les parties de liaison (14, 16) des sections de pale de rotor (10, 11) adjacentes à l'aide d'au moins une cheville conique (30) qui est mise sous tension par au moins un moyen de mise sous tension (28) traversant la cheville conique (30).

14. Procédé suivant la revendication 13, selon lequel les secondes sections de pale de rotor (11) sont hissées par un treuil situé dans une nacelle avant de relier les secondes sections de pale de rotor (11) aux premières sections de pale de rotor (10).

15. Procédé selon la revendication 13 ou 14, comprenant en outre l'opération consistant :
F. à relier une pointe (1) de pale de rotor à ladite seconde section de pale de rotor (11).
